# EUROPEAN PATENT SPECIFICATION

(11) **EP 3 186 055 B1**
(45) Date of publication and mention of the grant of the patent: **10.04.2019**
(21) Application number: 14758130.0
(22) Date of filing: 29.08.2014
(51) Int. Cl.: B29C 33/00, B29C 44/58, F16J 13/00, F25D 23/06, B29K 75/00, B29L 31/00

(54) **IMPROVED FOAM INJECTION PLUG ASSEMBLY FOR USE IN A REFRIGERATION APPLIANCE**
VERBESSERTER SCHAUMSTOFFEINSPRITZSTOPFEN-BAUGRUPPE ZUR VERWENDUNG IN EINEM KÄLTEGERÄT
ENSEMBLE BOUCHON D'INJECTION DE MOUSSE AMÉLIORÉ DESTINÉ À ÊTRE UTILISÉ DANS UN APPAREIL DE RÉFRIGÉRATION

(43) Date of publication of application: 05.07.2017
(73) Proprietor: Arçelik Anonim Sirketi, 34950 Istanbul (TR)
(72) Inventor: YASAR, Mehmet, 34950 Istanbul (TR); ERSOZ, Tayfun, 34950 Istanbul (TR); KAPLAN, Ergin, 34950 Istanbul (TR); EROL, Semih, 34950 Istanbul (TR); GULTEKIN, Ozgun Atac, 34950 Istanbul (TR)
(86) International application number: PCT/EP2014/068391
(87) International publication number: WO 2016/029963

(56) References cited:
- DE-A1- 19 825 980
- DE-U1- 7 826 431
- JP-A- H09 220 724
- US-A- 3 478 922
- US-A- 4 761 860

## Description

The present invention relates to a refrigeration appliance, in particular in a domestic refrigerator which includes a thermal insulation layer made of foam material such as polyurethane and a method of manufacturing such refrigeration appliance. The present invention more particularly relates to a foam injection plug assembly for injecting liquid foam material during the manufacturing process of the refrigeration appliance.

In general, the energy efficiency of a refrigeration appliance is influenced by several factors. One important factor is the thermal insulation of the refrigeration appliance. Several techniques are known for thermally insulating a refrigeration appliance. In a commonly known technique, when manufacturing the refrigeration appliance, liquid foam material, in particular polyurethane is injected with an injection head into the intermediate region between the outer case and the inner case of the refrigeration appliance through an injection aperture formed on the outer case. After completion of the curing process, the foam material provides a thermal insulation layer.

During the curing process of the foam material, the air inside the intermediate region is generally allowed to escape to the outside through an air escape opening that is typically formed into the outer case. The air escape opening is usually at the highest location of the outer case in a state when the refrigeration appliance is positioned for filling the liquid foam material into the intermediate region. To prevent the curing foam material from leaking to the outside through the air escape opening, an air permeable material such as a sponge is generally placed in front of the air escape opening. The sponge is usually fixed to the air escape opening by utilizing adhesives. The sponge allows the air to escape to the outside while keeping the curing foam material inside the intermediate region. To prevent the foam material from leaking through the injection aperture to the outside during the curing process, a flexible leaf is usually plugged onto the injection aperture.

A drawback of the above-mentioned conventional technique is that during the curing process, the foam material may occasionally leaks through the injection aperture to the outside. Consequently, the amount of foam material filled into intermediate region will not be sufficient for a proper insulation. Such a refrigeration appliance has an inferior quality and becomes junk. Moreover, such production errors and production wastes increase the overall costs per refrigeration appliance.

JPH07237230 (A) discloses a prior art refrigerator. This prior art refrigerator comprises an inner case and an outer case which includes an injection aperture for injecting foam material into the space between the inner case and the outer case. In this prior art refrigerator, the injection aperture is closed by a flexible leaf.

DE 198 25 980 A1 discloses a refrigerator with a valve which is provided for filling the intermediate space in a double-sided wall with foam. A valve flap is fastened to a wall part via a rotating joint in such a way that it falls into the closing position by means of its own weight.

DE 78 26 431 U1 also discloses a refrigerator with a valve provided for filling the intermediate space in a double-sided wall with foam. A flexible valve flap is fastened to a frame part such that it returns to the closing position by means of its elasticity.

An objective of the present invention is to provide a foam injection plug assembly and a refrigeration appliance having the same which overcomes the aforementioned drawbacks of the prior art in a cost effective way and which has an improved reliability. Another objective of the present invention is to provide a method of manufacturing a refrigeration appliance using the plug assembly of the present invention.

These objectives have been achieved by the foam injection plug assembly as defined in claim 1, the refrigeration appliance as defined in claim 5 and the manufacturing method of as defined in claim 7. Further achievements have been attained by the subject-matters respectively defined in the dependent claims.

The foam injection plug assembly of the present invention comprises a frame which is attachable to the outer case around the aperture, a pivotable lid which is hinged to the frame and configured to pivotably move within the intermediate region between a first position where the aperture is leak-tightly closed and a second position where the aperture is opened and a spring element which is attached to the frame and configured to abut against the rear surface of the lid, which is averted from the foam injection direction so as to bias the lid to the first position.

According ot the invention, the frame is a two-piece component. The inner and outer pieces cover opposite sides of the outer case around the aperture.

Each piece has an opening which faces the aperture. These openings and the aperture define a foam injection passage for the injection head. According to the invention, the inner and outer pieces have parts which interlock through cut-outs formed in the outer case. Thereby, the frame can be easily and firmly connected with each other and assembled with the outer case. In another version of this embodiment, the interlocking parts have claws and snap slots which face each other.

In an alternative embodiment, not according to the invention, the inner piece and the outer piece of the frame are assembled with the outer case by an adhesive. In another alternative embodiment, not according to the invention, the two pieces of the frame are assembled with the outer case by screws or the like.

In another embodiment, the spring element is mountable to a retainer formed on the inner piece of the frame. In this embodiment, the lid is integrally formed with the inner piece of the frame. A straight groove formed on the inner piece of the frame functions as a hinge for pivoting the lid. In a version of this embodiment, an elastically deformable metal clip is used as a spring element. The ends of the clip are retained by a pair of slots formed on the inner piece of the frame. In this embodiment, the clip has a raised portion which remains permanently in contact with the rear surface of the lid.

In another embodiment, the contour of the foam injection passage matches the periphery of the injection head. In a version of this embodiment, the passage is substantially round shaped.

With the present invention, in particular by virtue of the foam injection plug assembly, the curing foam material can be prevented from leaking to the outside and a proper thermal insulation capacity can be attained. Thereby, also the production wastes and the production errors due to leakage of the foam material have been eliminated or reduced as much as possible. With the present invention, a cost effective injection technique has been attained both in view of material and labor. With the foam injection plug assembly of the present invention, also the moisture is prevented from diffusing into the refrigeration appliance through the injection aperture. Thereby, the cured foam material can be permanently maintained in a proper condition and the thermal insulation capacity thereof is prevented from degrading over time. With the present invention, the consumer satisfaction can be increased.

Additional advantages of the foam injection plug assembly according to the present invention, the refrigeration appliance according to the present invention and the method of manufacturing the refrigeration appliance according to the present invention will become apparent with the detailed description of the embodiments with reference to the accompanying drawings in which:
Figure 1 - is a schematic perspective view of the domestic refrigerator which has a foam injection plug assembly according to an embodiment of the present invention;
Figure 2 - is a schematic perspective enlarged view of the detail A of Fig. 1;
Figure 3 - is a schematic partial side view of the domestic refrigerator which has the foam injection plug assembly according to an embodiment of the present invention, wherein the liquid foam injection passage is leak-tightly closed by the pivotable lid prior to inserting the liquid foam injection head into the passage;
Figure 4 - is a schematic partial side view of the domestic refrigerator which has the foam injection plug assembly according to an embodiment of the present invention, wherein the liquid foam injection passage is opened after having inserted the liquid foam injection head into the passage;
Figure 5 - is a schematic partial perspective exploded view of the domestic refrigerator which has the foam injection plug assembly as shown in Fig. 1;
Figure 6 - is a schematic perspective exploded view of the foam injection plug assembly as shown in Fig. 1, wherein the liquid foam injection head is omitted;
Figure 7 - is another schematic perspective exploded view of the foam injection plug assembly as shown in Fig. 1, wherein the liquid foam injection head is omitted;
Figure 8 - is schematic perspective view of the inner cover of the foam injection plug assembly according to an embodiment of the present invention;
Figure 9 - is a schematic perspective enlarged view of the detail B of Fig. 8;
Figure 10 - is a schematic front view of the spring element of the foam injection plug assembly according to an embodiment of the present invention;

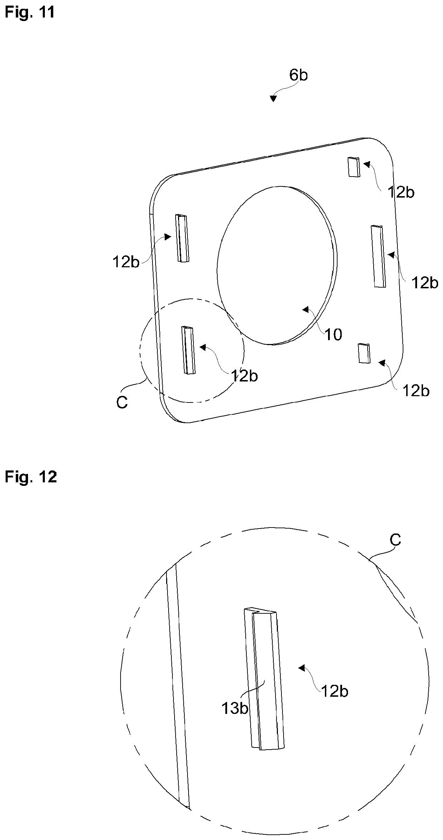

Figure 11 - is schematic perspective view of the outer cover of the foam injection plug assembly according to an embodiment of the present invention;
Figure 12 - is a schematic perspective enlarged view of the detail C of Fig. 11;

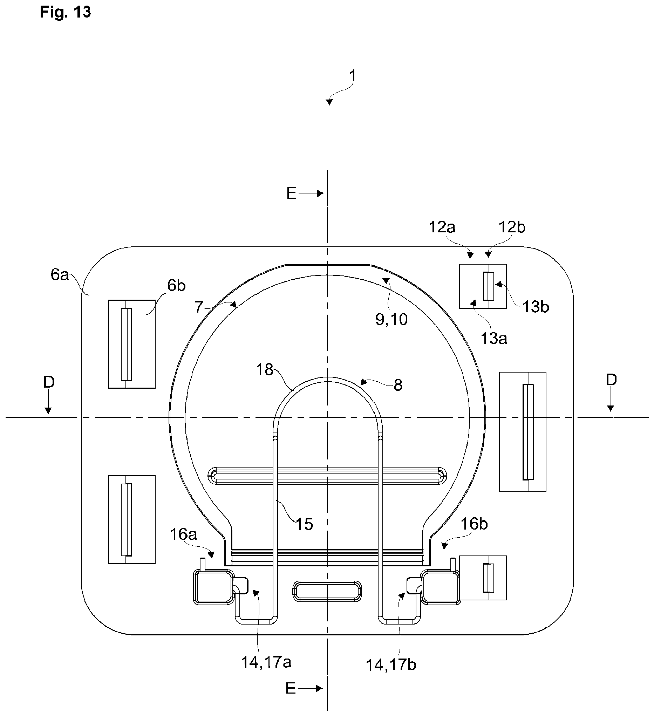

Figure 13 - is a schematic rear view of the foam injection plug assembly according to an embodiment of the present invention, wherein the outer case is omitted;

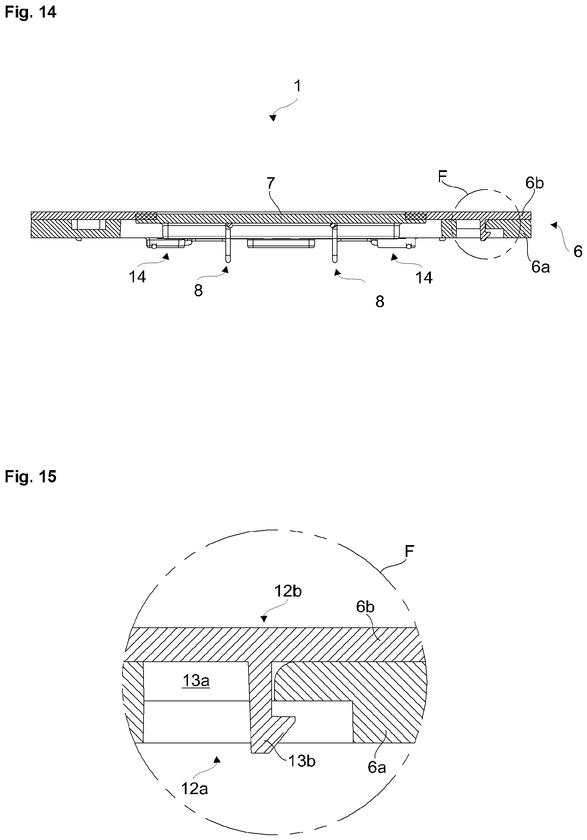

Figure 14 - is a schematic sectional view of the foam injection plug assembly of Fig. 13, taken along the line D-D;
Figure 15 - is a schematic enlarged view of the detail F of Fig. 14;

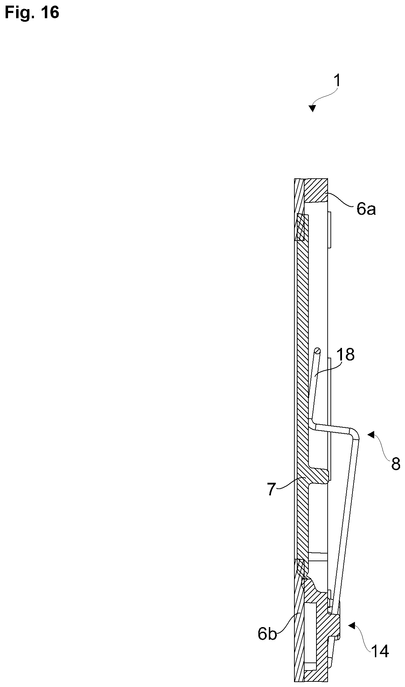

Figure 16 - is a schematic sectional view of the foam injection plug assembly of Fig. 13, taken along the line E-E.

The reference signs appearing on the drawings relate to the following technical features.
1. Plug assembly
2. Refrigeration appliance
3. Outer case
4. Aperture
5. Intermediate region
6. Frame
6a. Inner cover
6b. Outer cover
7. Lid
8. Spring element
9. First opening
10. Second opening
11. Cut-out
12a. Connector
12b. Counterpart connector
13a. Snap slot
13b. Claw
14. Retainer
15. Clip
16a. End
16b. End
17a. Mounting slot
17b. Mounting slot
18. Raised portion
19. Injection head

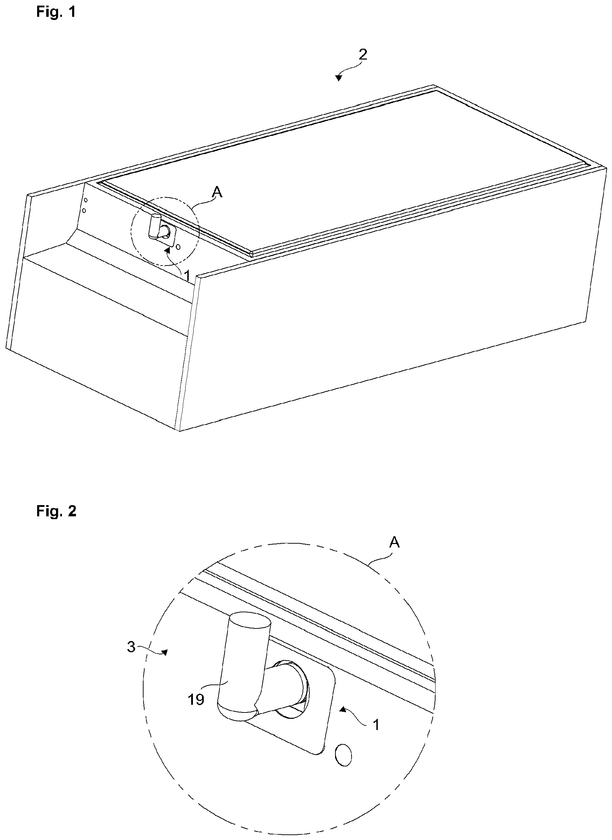

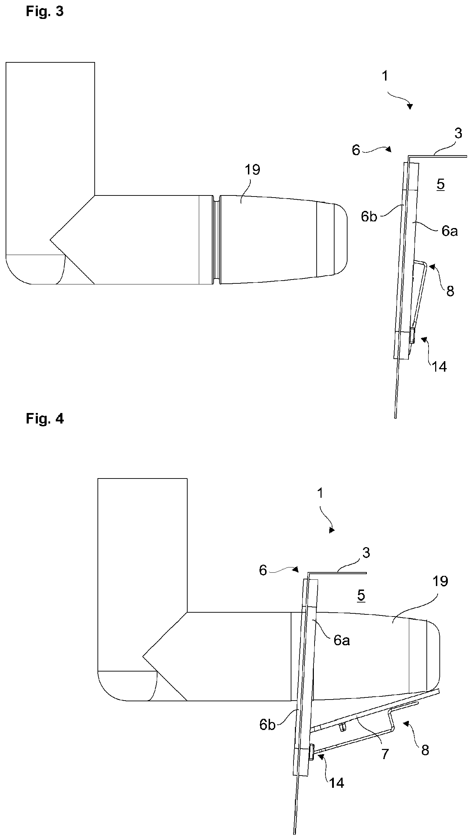

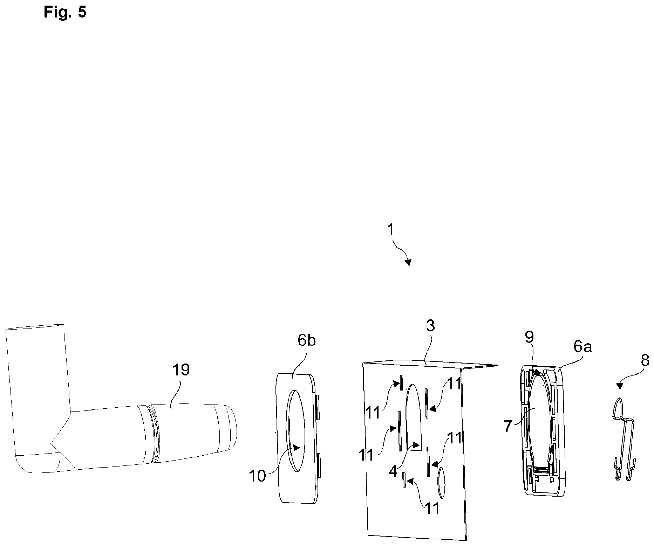

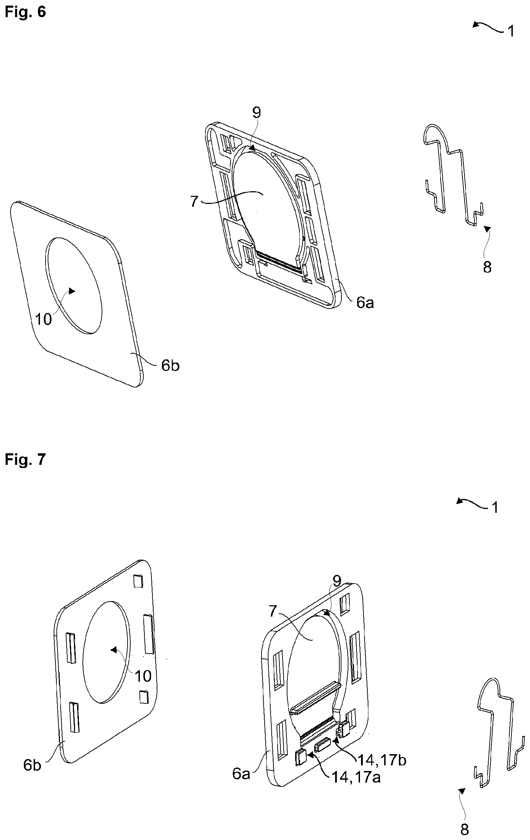

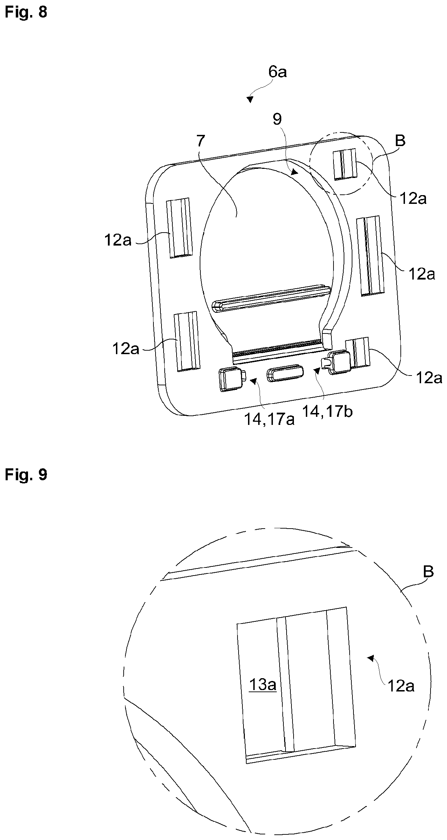

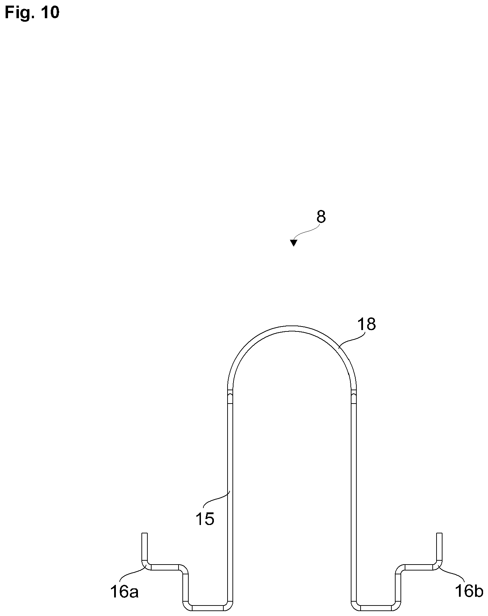

The foam injection plug assembly (1) is suitable for use in a refrigeration appliance (2), in particular a domestic refrigerator (2) (Fig. 1 to 10).

The domestic refrigerator (2) comprises an inner case (not shown) and an outer case (3). The inner case forms the refrigeration compartment (not shown). The outer case (3) encloses at least partly the inner case. The outer case (3) has an aperture (4) which defines a passage for injecting liquid foam material into the intermediate region (5) between the inner case and the outer case (3).

The foam injection plug assembly (1) of the present invention further comprises a frame (6) which is attachable to the outer case (3) around the aperture (4), a pivotable lid (7) which is hinged to the frame (6) and configured to move within the intermediate region (5) between a first position where the aperture (4) is leak-tightly closed and a second position where the aperture (4) is opened and a spring element (8) which is attached to the frame (6) and configured to abut against the rear surface of the lid (7), which is averted from the foam injection direction so as to bias the lid (7) to the first position.

The domestic refrigerator (2) of the present invention comprises the foam injection plug assembly (1) according to the present invention.

In an embodiment, the frame (6) comprises an inner cover (6a) and an outer cover (6b) which together sandwich the outer case (3). The inner cover (6a) has a first opening (9). The outer cover (6b) has a second opening (10). The first opening (9), the aperture (4) and the second opening (10) define the passage for injecting the liquid foam material into the intermediate region (5). The inner cover (6a) is configured to leak-tightly abut against the inner surface of the outer case (3) such that the first opening (9) fluidly communicates with the aperture (4). The outer cover (6b) is configured to leak-tightly abut against the outer surface of the outer case (3) such that the second opening (10) fluidly communicates with the aperture (4).

In a version of this embodiment, the inner cover (6a) has one or more than one connector (12a) and the outer cover (6b) has one or more than one counterpart connector (12b) for releasably engaging with the corresponding connector (12a). The connector (12a) and the counterpart connector (12) releasably engage through a corresponding cut-out (11) formed into the outer case (3).

In another version of this embodiment, the connector (12a) has a snap slot (13a) and the counterpart connector (12b) has a corresponding claw (13b). The claw (13b) snap-fittingly engages with the snap slot (13a).

In another version of this embodiment, the inner cover (6a) has a retainer (14) for detachably mounting the spring element (8). The pivotable lid (7) is integrally formed with the inner cover (6a).

In another version of this embodiment, the spring element (8) comprises an elastically deformable u-shaped clip (15). The clip (15) has an arc-shaped raised portion (18) which abuts against the rear surface of the lid (7). The opposing ends (16a, 16b) of the clip (15) are insertable into opposing mounting slots (17a, 17b) of the retainer (14).

In another example, the foam injection plug assembly (1) further comprises a liquid foam injection head (19) for inserting into the passage so as to inject liquid foam material into the intermediate region (5). The periphery of the injection head (19) form-fittingly matches the contour of the passage.

In another embodiment, the outer case (3) is at least partly made of paper or the like.

The present invention also provides a method of manufacturing the refrigeration appliance (2), in particular the domestic refrigerator (2) by utilizing the foam injection plug assembly (1) of the present invention. In the method of the present invention,
the foam injection plug assembly (1) is assembled with the refrigeration appliance (2), in particular with the outer case (3). Then, the liquid foam injecting head (19) is inserted into the passage and a predetermined amount of liquid foam material is injected into the intermediate region (5). Thereafter, the liquid foam injecting head (19) is removed.

With the present invention, in particular by virtue of the foam injection plug assembly (1), the curing foam material can be prevented from leaking to the outside and a proper thermal insulation capacity can be attained. Thereby, also the production wastes and the production errors due to leakage of the foam material have been eliminated or reduced as much as possible. With the present invention, a cost effective injection technique has been attained both in view of material and labor. With the present invention, in particular by virtue of the foam injection plug assembly (1) the moisture can be prevented from diffusing into the refrigeration appliance (2) through the injection aperture (4). Thereby, the cured foam material can be permanently maintained in a proper condition and the thermal insulation capacity thereof is prevented from degrading over time. With the present invention, the consumer satisfaction can be increased.

## Claims

1. A foam injection plug assembly (1) for use in a refrigeration appliance (2), comprising
- an inner case which forms a refrigeration compartment and an outer case (3) which encloses at least partly the inner case, wherein the outer case (3) has an aperture (4) which defines a passage for injecting liquid foam material into the intermediate region (5) between the inner case and the outer case (3),
- a pivotable lid (7) which is configured to pivotably move within the intermediate region (5) between a first position where the aperture (4) is leak-tightly closed and a second position where the aperture (4) is opened,
- a frame (6) which is attachable to the outer case (3) around the aperture (4) and to which the pivotable lid (7) is hinged,
**characterized by**
- a spring element (8) which is attached to the frame (6) and configured to abut against the rear surface of the lid (7), which is averted from the foam injection direction so as to bias the lid (7) to the first position,
- the frame (6) comprising an inner cover (6a) which has a first opening (9), wherein the inner cover (6a) is configured to leak-tightly abut against the inner surface of the outer case (3) such that the first opening (9) fluidly communicates with the aperture (4),
- the frame (6) further comprising an outer cover (6b) which has a second opening (10), wherein the outer cover (6b) is configured to leak-tightly abut against the outer surface of the outer case (3) such that the second opening (10) fluidly communicates with the aperture (4), wherein the first opening (9), the aperture (4) and the second opening (10) define the passage for injecting the liquid foam material into the intermediate region (5),
- the outer case (3) having one or more than one cut-out (11), the inner cover (6a) having one or more than one connector (12a) and the outer cover (6b) having one or more than one counterpart connector (12b) for releasably engaging with the corresponding connector (12a) through the corresponding cut-out (11).

2. The foam injection plug assembly (1) according to claim 1, **characterized in that** the connector (12a) has a snap slot (13a) and the counterpart connector (12b) has a corresponding claw (13b), wherein the claw (13b) snap-fittingly engages with the snap slot (13a).

3. The foam injection plug assembly (1) according to any one of claims 1 to 2, **characterized in that** the inner cover (6a) has a retainer (14) for detachably attached the spring element (8) and the pivotable lid (7) is integrally formed with the inner cover (6a).

4. The foam injection plug assembly (1) according to claim 3, **characterized in that** the spring element (8) comprises an elastically deformable u-shaped clip (15), wherein the opposing ends (16a, 16b) of the clip (15) are insertable into opposing mounting slots (17a, 17b) of the retainer (14) and wherein the clip (15) has an arc-shaped raised portion (18) which abuts against the rear surface of the lid (7).

5. A domestic refrigerator (2) comprising
- an inner case which forms a refrigeration compartment and
- an outer case (3) which encloses at least partly the inner case, wherein the outer case (3) has an aperture (4) which defines a passage for injecting liquid foam material into the intermediate region (5) between the inner case and the outer case (3),
**characterized by**
a foam injection plug assembly (1) as defined in any one of claims 1 to 4.

6. The domestic refrigerator (2) according to claim 5, **characterized in that** the outer case (3) is at least partly made of paper.

7. A method of manufacturing a refrigeration appliance (2) as defined in claim 5 or 6, the method comprising:
- a step of assembling the foam injection plug assembly (1) as defined in any one of claims 1 to 4 with the refrigeration appliance (2),
- a step of inserting the liquid foam injecting head (19) into the passage and filling a predetermined amount of liquid foam material into the intermediate region (5) and
- a step of removing the liquid foam injecting head (19).

## Patentansprüche

1. Eine Schaumstoffeinspritzdüsenanordnung (1) für die Verwendung in einem Kühlgerät (2), umfasst
- ein inneres Gehäuse, das ein Kühlfach bildet und ein äußeres Gehäuse (3), welches das innere Gehäuse mindestens teilweise umschließt, wobei das äußere Gehäuse (3) eine Öffnung (4) darstellt, die einen Durchgang zum Einspritzen von flüssigem Schaummaterial in das als Zwischenprodukt definierte Bereich (5) zwischen dem Innengehäuse und dem Außengehäuse (3),
- einen schwenkbaren Deckel (7), der zum schwenkbaren Bewegen innerhalb des Zwischenbereichs (5) zwischen der ersten Position, in der die Öffnung (4) dicht geschlossen ist und der zweiten Position, in der die Öffnung (4) geöffnet ist, angeordnet ist,
- einen Rahmen (6), der an dem äußeren Gehäuse (3) um die Öffnung (4) anbringbar ist und an dem der schwenkbare Deckel (7) angelegt ist, und **dadurch gekennzeichnet ist,**
- **dass** ein Federelement (8), welches an dem Rahmen (6) befestigt ist und dazu konfiguriert ist, damit es an der hinteren Oberfläche des Deckels (7) anliegt, das von der Schaumeinspritzrichtung abgewandt ist, um den Deckel (7) dazu an der ersten Position vorzuspannen,
- **dass** der Rahmen (6) eine innere Abdeckung (6a) aufweist, die eine erste Öffnung (9) besitzt, wobei die innere Abdeckung (6a) so konfiguriert ist, dass sie dicht an der Innenfläche des äußeren Gehäuses (3) anliegt, so dass die die erste Öffnung (9) mit der Öffnung (4) in Fluidverbindung steht,
- **dass** der Rahmen (6) darüber hinaus eine äußere Abdeckung (6b) aufweist, die eine zweite Öffnung (10) besitzt, wobei die äußere Abdeckung (6b) so konfiguriert ist, dass sie dicht an der Außenfläche des äußeren Gehäuses (3) anliegt, so dass die zweite Öffnung (10) in Fluidverbindung mit der Öffnung (4) steht, wobei die erste Öffnung (9), die Öffnung (4) und die zweite Öffnung (10) den Durchgang zum Einspritzen des flüssigen Schaumstoffmaterials in den Zwischenbereich (5) definieren können)
- **dass** das Außengehäuse (3) einen oder mehrere Ausschnitte (11) aufweist, der Innenmantel (6a) einen oder mehrere Verbinder (12a) und der Außenmantel (6b) ein oder mehrere Gegenstücke aufweist und einen Gegenverbinder (12b) zum lösbaren Eingriff mit dem entsprechenden Verbinder (12a) durch den entsprechenden Ausschnitt (11) ermöglicht.

2. Eine Schaumstoffeinspritzdüsenanordnung (1), wie in Anspruch 1 aufgeführt, **ist dadurch gekennzeichnet, dass** der Verbinder (12a) einen Schnappschlitz (13a) und der Gegenverbinder (12b) eine entsprechende Klaue (13b) aufweist, wobei die Klaue (13b) in den Schnappschlitz (13a) rastet einschnappt.

3. Eine Schaumstoffeinspritzdüsenanordnung (1), wie in einem der aufgeführten Ansprüche 1 bis 2, **ist dadurch gekennzeichnet, dass** der innere Deckel (6a) einen Halter (14) zum lösbaren Befestigen des Federelements (8) und des schwenkbaren Deckels (7) aufweist und kompakt mit der inneren Abdeckung (6a) ausgebildet ist.

4. Eine Schaumstoffeinspritzdüsenanordnung (1), wie in Anspruch 3 aufgeführt, **ist dadurch gekennzeichnet, dass** das Federelement (8) eine elastische und verformbare U-förmige Klammer (15) besitzt, wobei die gegenüberliegenden Enden (16a, 16b) der Klammer (15) in gegenüberliegenden Montageschlitze (17a, 17b) des Halters (14) liegen und einsetzbar sind, wobei die Klammer (15) einen bogenförmigen Abschnitt (18) aufweist, der an der hinteren Oberfläche des Deckels (7) angelegt ist.

5. Ein Haushaltskühlschrank (2) umfasst,
- ein inneres Gehäuse, das ein Kühlfach bildet und
- ein äußeres Gehäuse (3), welches das innere Gehäuse mindestens teilweise umschließt, wobei das äußere Gehäuse (3) eine Öffnung (4) darstellt, die einen Durchgang zum Einspritzen von flüssigem Schaummaterial in den Zwischenbereich (5) zwischen dem inneren Gehäuse und dem Gehäuse, definiert als äußere Hülle (3) ermöglicht,
diese sind **durch,**
die Schaumstoffeinspritzdüsenanordnung (1) nach einem der Ansprüche 1 bis 4 **gekennzeichnet**.

6. Ein Haushaltskühlschrank (2), nach Anspruch 5 **ist dadurch gekennzeichnet, dass** das Außengehäuse (3) teilweise aus Papier besteht.

7. Ein Verfahren für die Herstellung eines Kühlgeräts (2) nach Anspruch 5 oder 6, das Verfahren umfasst:
- einen Schritt für das Zusammenbauen der Schaumstoffeinspritzdüsenanordnung (1) nach einem der Ansprüche 1 bis 4 mit dem Kühlgerät (2),
- einen Schritt für das Einführen des Flüssigschauminjektionskopfes (19) in den Durchgang und das Einfüllen einer vorbestimmten Menge an Flüssigschaummaterial in den Zwischenbereich (5) und
- einen Schritt für das Entfernen des Flüssigkeitsschauminjektionskopfes (19).

## Revendications

1. Un ensemble de bouchons d'injection de mousse (1) pour une utilisation dans un appareil de réfrigération (2), comprenant
- un boitier intérieur qui forme un compartiment de réfrigération et un boitier extérieur (3) qui entoure au moins partiellement le boitier intérieur, dans lequel le boitier extérieur (3) présente une ouverture (4) qui définit un passage pour injecter un matériau en mousse liquide dans la zone intermédiaire (5) entre le boitier intérieur et le boitier extérieur (3),
- un couvercle pivotant (7) qui est configuré pour se déplacer de manière pivotante dans la zone intermédiaire (5) entre une première position où l'ouverture (4) est fermée de manière étanche et une seconde position où l'ouverture (4) est ouverte,
- un cadre (6) qui est fixé au boîtier extérieur (3) autour de l'ouverture (4) et sur lequel le couvercle pivotant (7) est articulé, **est caractérisé en ce que**
- un élément à ressort (8) qui est fixé au cadre (6) et configuré de manière à venir en butée contre la surface arrière du couvercle (7), qui est détourné de la direction d'injection de mousse afin d'amener le couvercle (7) en position première,
- le cadre (6) comprenant un couvercle intérieur (6a) qui présente une première ouverture (9), dans laquelle le couvercle intérieur (6a) est configuré pour venir en butée étanche contre la surface intérieure du boîtier extérieur (3) de sorte que la première ouverture (9) communique de manière fluide avec l'ouverture (4),
- le cadre (6) comprenant en outre un couvercle extérieur (6b) qui présente une seconde ouverture (10), dans laquelle le couvercle extérieur (6b) est configuré pour venir en contact étanche contre la surface extérieure du boîtier extérieur (3) de sorte que la seconde ouverture (10) communique sans entrave avec l'ouverture (4), où la première ouverture (9), l'ouverture (4) et la seconde ouverture (10) définissent le passage pour injecter le matériau sous forme de mousse liquide dans la région intermédiaire (5),
- le boîtier extérieur (3) ayant une ou plusieurs découpe (11), le couvercle intérieur (6a) ayant un ou plusieurs connecteurs (12a) et le couvercle extérieur (6b) ayant un ou plusieurs connecteurs équivalents (12b) pour venir de façon amovible en prise avec le connecteur correspondant (12a) à travers la découpe correspondante (11).

2. L'ensemble de bouchons d'injection de mousse (1) selon la déclaration 1, **est caractérisé en ce que** le connecteur (12a) présente une fente d'encliquetage (13a) et le connecteur équivalent (12b) présente une griffe correspondante (13b), dans laquelle la griffe (13b) s'engage par encliquetage dans la fente d'encliquetage (13a).

3. Un ensemble de bouchons d'injection de mousse (1) selon l'une quelconque des déclarations 1 à 2, **est caractérisé en ce que** le couvercle intérieur (6a) comporte un support (14) pour fixer de manière amovible l'élément ressort (8) et le couvercle pivotant (7) est formé intégralement avec le couvercle intérieur (6a).

4. Un ensemble de bouchons d'injection de mousse (1) selon la déclaration 3, **est caractérisé en ce que** l'élément à ressort (8) comprend un clip (15) en forme de U déformable élastiquement, les extrémités opposées (16a, 16b) du clip (15) pouvant être insérées dans des fentes de montage opposées (17a, 17b) du support (14) et où le clip (15) présentant une partie en relief (18) en forme d'arc repose contre la surface arrière du couvercle (7).

5. Un réfrigérateur domestique (2) comprenant
- un boîtier intérieur qui forme un compartiment de réfrigération et
- un boîtier extérieur (3) qui entoure au moins partiellement le boîtier intérieur, dans lequel le boîtier extérieur (3) présente une ouverture (4) qui définit un passage pour injecter un matériau de mousse liquide dans la zone intermédiaire (5) entre le boîtier intérieur et le boîtier extérieur (3),
**est caractérisé en ce que**
un ensemble de bouchons d'injection de mousse (1) tel que défini dans l'une quelconque des déclarations 1 à 4.

6. Un réfrigérateur domestique (2) selon la déclaration 5, **est caractérisé en ce que** le boîtier extérieur (3) est au moins partiellement composé de papier.

7. Un procédé de fabrication d'un appareil de réfrigération (2) tel que défini dans la déclaration 5 ou 6, le procédé comprenant :
- une étape d'assemblage de l'ensemble de bouchons d'injection de mousse (1) tel que défini dans l'une quelconque des déclarations 1 à 4 avec l'appareil de réfrigération (2),
- une étape consistant à insérer la tête d'injection de mousse liquide (19) dans le passage et à remplir une quantité prédéterminée de matériau de mousse liquide dans la zone intermédiaire (5), et
- une étape consistant à enlever la tête d'injection de mousse liquide (19).
